(19) Europäisches Patentamt
European Patent Office
Office européen des brevets

(11) EP 4 610 949 A1

(12) EUROPEAN PATENT APPLICATION
published in accordance with Art. 153(4) EPC

(43) Date of publication:
03.09.2025 Bulletin 2025/36

(21) Application number: 23881235.8

(22) Date of filing: 12.06.2023

(51) International Patent Classification (IPC):
G07C 9/00 (2020.01)    G07C 9/37 (2020.01)

(52) Cooperative Patent Classification (CPC):
G07C 9/00; G07C 9/37

(86) International application number:
PCT/CN2023/099591

(87) International publication number:
WO 2024/087644 (02.05.2024 Gazette 2024/18)

(84) Designated Contracting States:
AL AT BE BG CH CY CZ DE DK EE ES FI FR GB
GR HR HU IE IS IT LI LT LU LV MC ME MK MT NL
NO PL PT RO RS SE SI SK SM TR
Designated Extension States:
BA
Designated Validation States:
KH MA MD TN

(30) Priority: 26.10.2022 CN 202211320271

(71) Applicant: Zhejiang Uniview Technologies Co.,
Ltd.
Hangzhou, Zhejiang 310051 (CN)

(72) Inventors:
• XU, Wei
  Hangzhou, Zhejiang 310051 (CN)
• WANG, Jun
  Hangzhou, Zhejiang 310051 (CN)

(74) Representative: HGF
HGF Limited
1 City Walk
Leeds LS11 9DX (GB)

(54) **BIOMETRIC IDENTIFICATION METHOD, UPDATING METHOD, ELECTRONIC DEVICE AND STORAGE MEDIUM**

(57) A biometric identification method, an updating method, an electronic device (10) and a storage medium (18). The biometric identification method includes: collecting current biometric information, where the current biometric information includes current human face information and/or current fingerprint information (S110); identifying the current biometric information to obtain a current identification result (S120); and determining an identification coefficient based on a collection time of the current biometric information, and adjusting the current identification result based on the identification coefficient to obtain a target identification result (S130).

Collect current biometric information, where the current biometric information includes current human face information and/or current fingerprint information — S110

Identify the current biometric information to obtain a current identification result — S120

Determine an identification coefficient based on the collection time of the current biometric information, and adjust the current identification result based on the identification coefficient to obtain a target identification result — S130

**FIG. 1**

## Description

The present disclosure claims priority to Chinese Patent Application No. 202211320271.6 filed with the China National Intellectual Property Administration (CNIPA) on Oct. 26, 2022, the disclosure of which is incorporated herein by reference in its entirety.

TECHNICAL FIELD

The present application relates to the field of biometric identification and updating, for example, to a biometric identification method, a biometric updating method, an electronic device and a storage medium.

BACKGROUND

A biometric identification lock (including smart locks such as a fingerprint lock and a facial recognition access control system) refers to a lock that differs from a conventional mechanical lock by offering enhanced intelligence in user identification, security, and management. Such a smart lock serves as the actuating component for door locking in an access control system.

The application of the smart locks in households is becoming increasingly widespread. The advantage of the smart lock is that the smart lock eliminates the need to carry keys and enables convenient and quick door unlocking. However, the drawback lies in that although biometric information such as fingerprints or facial information is unique, physical changes due to growth at different life stages, environmental factors, variations in facial features or fingerprints, and potential stains may all impact the efficiency of unlocking operations of the smart lock. Besides smart locks, other products such as facial recognition access control systems and facial recognition systems also require the establishment of face databases during deployment to verify whether individuals are whitelisted. As the systems are used over a long period of time, the personnel whitelist in the systems also needs to be updated. Additionally, there are also unlocking products and solutions that rely on facial recognition technology.

SUMMARY

The present application provides a biometric identification method, a biometric updating method, an electronic device and a storage medium which can achieve intelligent identification of correct biometric information and intelligent dynamic update of biometric information, thereby improving the efficiency of unlocking operations.

According to an aspect of the present application, a biometric identification method is provided. The method includes the following steps.

Current biometric information is collected, where the current biometric information includes at least one of current human face information or current fingerprint information.

The current biometric information is identified to obtain a current identification result.

An identification coefficient is determined based on the collection time of the current biometric information, and the current identification result is adjusted based on the identification coefficient to obtain a target identification result.

According to another aspect of the present application, a biometric updating method is provided. The method includes the following steps.

In response to current biometric information being current fingerprint information, the current fingerprint information is identified by using the biometric identification method to obtain a target identification result, where the current fingerprint information includes current fingerprint pattern information and current pattern depth information.

In response to the target identification result satisfying a preset fingerprint update condition, historical fingerprint information stored in a database is updated according to the current fingerprint information.

According to another aspect of the present application, an electronic device is provided. The electronic device includes at least one processor and a memory.

The memory is communicatively connected to the at least one processor.

The memory is configured to store a computer program executable by the at least one processor, and the computer program, when executed by the at least one processor, enables the at least one processor to perform the biometric identification method or the biometric updating method in any of the embodiments of the present application.

According to another aspect of the present application, a computer-readable storage medium is provided. The computer-readable storage medium is configured to store computer instructions for, when executed by a processor, enabling the processor to perform the biometric identification method or the biometric updating method in any of the embodiments of the present application.

BRIEF DESCRIPTION OF DRAWINGS

The drawings used in the description of embodiments are described below. The drawings described below illustrate part of the embodiments of the present application, and those of ordinary skill in the art may obtain other drawings based on the drawings described below on the premise that no creative work is done.

FIG. 1 is a flowchart of a biometric identification method according to Embodiment one of the present application;
FIG. 2 is a flowchart of a biometric updating method according to Embodiment two of the present application;
FIG. 3 is a flowchart of a biometric updating process according to Embodiment three of the present application;
FIG. 4 is a schematic diagram of fingerprint information collection time according to Embodiment three of the present application;
FIG. 5 is a flowchart of a biometric updating process according to Embodiment four of the present application;
FIG. 6 is a schematic diagram of an angle variation of the identification result according to Embodiment four of the present application;
FIG. 7 is a schematic diagram of fingerprint region division according to Embodiment four of the present application;
FIG. 8 is a structure diagram of a biometric identification apparatus according to Embodiment five of the present application;
FIG. 9 is a structure diagram of a biometric updating apparatus according to Embodiment six of the present application; and
FIG. 10 is a structure diagram of an electronic device for performing a biometric identification method or a biometric updating method according to an embodiment of the present application.

DETAILED DESCRIPTION

For a better understanding of the present application by those skilled in the art, embodiments of the present application are described below in conjunction with the drawings in the embodiments of the present application. The embodiments described herein are part, not all, of the embodiments of the present application. All other embodiments obtained by those of ordinary skill in the art based on the embodiments in the present application without creative work are within the scope of the present application.

It is to be noted that the terms such as "first", "second", and the like in the specification, claims, and drawings of the present application are used for distinguishing similar objects and are not necessarily used for describing a particular order or sequence. It is to be understood that the data used in this manner is interchangeable in appropriate cases so that the embodiments of the present application described herein may also be performed in an order other than those illustrated or described herein. Additionally, the terms "comprising", "including", and any other variations thereof are intended to encompass a non-exclusive inclusion. For example, a process, method, system, product or device that includes a series of steps or units not only includes the expressly listed steps or units but may also include other steps or units that are not expressly listed or are inherent to such process, method, product or device.

Embodiment one

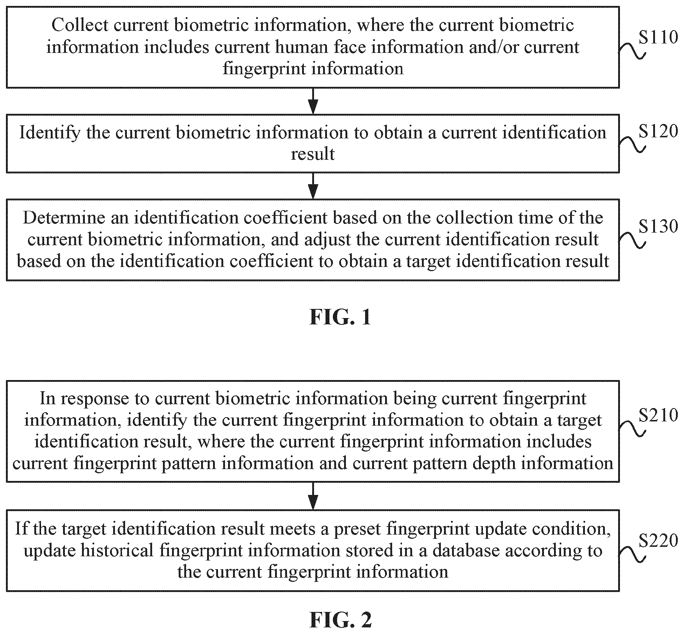

FIG. 1 is a flowchart of a biometric identification method according to Embodiment one of the present application. The embodiment herein is applicable to the case of identifying biometric identification. The method may be performed by a biometric identification apparatus. The biometric identification apparatus may be implemented by software and/or hardware and may be configured in an electronic device having a network communication function, and the electronic device may include a computer, a personal digital assistant, and the like. As shown in FIG. 1, the method includes S110, S120, and S130.

In S110, current biometric information is collected, where the current biometric information includes current human face information and/or current fingerprint information.

In the embodiment herein, the face information may refer to the facial feature information of a human being.

The fingerprint information refers to image data of the detailed features of a human fingerprint which is preserved in a certain manner (by inked impression or scanning) and can be viewed, accessed, compared, and analyzed when necessary.

In the solution herein, the current biometric information of a target user may be collected by using a pre-installed biometric information collection device. The number of target users may be multiple. For example, the face information may be collected by using a camera, and the fingerprint information may be collected by using a fingerprint collector.

In S120, the current biometric information is identified to obtain a current identification result.

In the embodiment herein, the current identification result may be obtained by performing similarity comparison on the current biometric information and historical biometric information stored in a database.

In S130, an identification coefficient is determined based on the collection time of the current biometric information, and the current identification result is adjusted based on the identification coefficient to obtain a target identification result.

In the solution herein, the target identification result may be obtained by multiplying the current identification result and the identification coefficient. Alternatively, the target identification result may also be obtained by performing an addition or subtraction operation on the current identification result and the identification coefficient. For example, the target identification result may be obtained by multiplying the current identification result and the identification coefficient.

In the embodiment herein, in the biometric information identification process, the time when the target user performs unlocking operations by using biometric information exhibits a relatively regular temporal variation, for example, the time period after work, a time period at school, and the like. Therefore, the collection time of the biometric information of the target user within a certain period of time may be discretized, and the discretized data may then be clustered to generate the appearance frequency and the appearance time period of the target user. The identification coefficient may be appropriately reduced in response to the frequency at which the target user frequently appears and the time period during which the target user frequently appears, and then the current identification result may be adjusted so that the user can access the smart lock more easily.

In the case of biometric identification attempts during irrational time periods, to prevent others from stealing the biometric information of the target user, the magnitude of the identification coefficient may be appropriately increased to raise the similarity threshold requirements for the access of the smart lock.

In the solution of the embodiment of the present application, the current biometric information is collected, the current biometric information is identified to obtain the current identification result, the identification coefficient is determined based on the collection time of the current biometric information, and the current identification result is adjusted based on the identification coefficient to obtain the target identification result. By implementing the preceding solution, the correct biometric information can be intelligently identified, the safety of users can be enhanced, and the efficiency of unlocking operations can be improved.

Those skilled in the art know or should know that for a newly installed smart lock, when the collected data is insufficient to generate an identification coefficient dependent on the collection time, the corresponding identification coefficient may be a fixed value, for example, 1. After the smart lock has been used for a period of time (such as for one week), the corresponding identification coefficient may be changed. For example, during the time period when the target user frequently appears, the identification coefficient may be adjusted to 0.95 so that the target user can access the smart lock more easily. For example, during the time period when the target user does not appear frequently, the identification coefficient may be adjusted to 1.05 to ensure security.

Embodiment two

FIG. 2 is a flowchart of a biometric updating method according to Embodiment two of the present application. The embodiment herein is applicable to the case of updating biometric information. The method may be performed by a biometric updating apparatus. The biometric updating apparatus may be implemented by software and/or hardware and may be configured in an electronic device having a network communication function, and the electronic device may include a computer, a personal digital assistant, and the like. As shown in FIG. 2, the method includes S210 and S220.

In S210, in response to current biometric information being current fingerprint information, the current fingerprint information is identified to obtain a target identification result, where the current fingerprint information includes current fingerprint pattern information and current pattern depth information.

The fingerprint pattern information refers to information about patterns formed by the ridges and valleys on the skin of the fingertips at the ends of human fingers.

In the embodiment herein, the pattern depth information may refer to the pattern of depth and shallowness in the fingerprint ridges. The pattern depth information is related to the height and weight of a person as well as the pressure applied during fingerprint collection. Specifically, the height significantly affects the pressing of a finger onto the display screen of the smart lock, thereby affecting the depth of the fingerprint.

In the solution herein, the current fingerprint information of a target user may be collected by using a pre-installed fingerprint collector in the smart lock. The number of target users may be multiple.

In the embodiment herein, the current identification result may be obtained by performing similarity comparison on the current fingerprint information and historical fingerprint information stored in a database. When the target user initially performs fingerprint enrollment on the smart lock functioning as a fingerprint lock, the fingerprint of a single finger may be collected multiple times to ensure that the collection of fingerprint information is sufficient to generate the pattern information, that is, multiple pieces of historical fingerprint information are stored in the database.

In S220, if the target identification result satisfies a preset fingerprint update condition, historical fingerprint information stored in a database is updated according to the current fingerprint information.

The preset fingerprint update condition may be constituted by constraint thresholds for the smart lock to perform identification and unlocking operations. Whether the target identification result satisfies the preset fingerprint update condition may be decided by comparing the target identification result with a preset threshold. For example, when the target identification result is greater than or equal to the preset threshold, the target identification result does not satisfy the preset fingerprint update condition, and at this point, the smart lock has high identification accuracy of fingerprint information; when the target identification result is less than the preset threshold, the target identification result satisfies the preset fingerprint update condition, and at this point, the smart lock has low identification accuracy of fingerprint information.

In the embodiment herein, if the target identification result does not satisfy the preset fingerprint update condition, the historical fingerprint information stored in the database does not need to be updated.

In the solution herein, if the target identification result satisfies the preset fingerprint update condition, the current fingerprint information is collected and processed, and the historical fingerprint information stored in the database is updated according to the current fingerprint information.

For example, it is assumed that the target user presses the display screen of the smart lock three times, that is, three pieces of current fingerprint information are collected. Because in the first two fingerprint collections, the fingerprint identification effect of the fingerprint information does not meet requirements or the target user has multiple fingerprint positional variations during enrollment, the collection of target identification results is performed three times, and the obtained three target identification results may be represented by D1, D2, and D3, respectively. The target identification results are recorded in the database. As shown in Table 1, the database records the time, the fingerprint pattern information, the pattern depth information, the identification time interval, and the enrolled finger of three fingerprint identifications, respectively.

Table 1

| Identific ation | Time | Fingerprint pattern information | Pattern depth information | Identification time interval | **Fin** ger |
|---|---|---|---|---|---|
| D1 | 2022817101 010020 | D1A1 | D1B1 | F1 | Z1 |
| D2 | 2022817101 010025 | D2A2 | D2B2 | F1 | Z1 |
| D3 | 2022817101 010036 | D3A3 | D2B2 | F1 | Z1 |

After the identification data is obtained, the associated fingerprint identification time corresponding to the current successful fingerprint identification is decided first. If the collection time of the current fingerprint information and the identification time are within a certain identification time interval, multiple instances of fingerprint pressing are determined to be the sequential operations from the same target user, and then the historical fingerprint information may be updated based on the collected current fingerprint information. The identification time interval may be set according to fingerprint identification requirements. For example, the identification time interval may be set to 100 milliseconds, that is, multiple fingerprint presses within 100 milliseconds are considered the sequential operations from the same target user.

If one finger of the target user has fingerprint identification at multiple angles, multiple pieces of fingerprint information are scored. The maximum value corresponds to a fingerprint with the highest score, the fingerprint is then selected as the content for updating, and the corresponding historical fingerprint information in the database is accordingly updated. For example, the multiple pieces of fingerprint information of the same finger are represented by $Zx1$, $Zx2$, and $Zx3$, respectively, and $Zx1$, $Zx2$, and $Zx3$ may be sequentially compared with the historical fingerprint information to obtain the fingerprint with the highest score. For example, the score of the fingerprint information is calculated by using the following formula: $Zi = (Mi \times Zxi)/m + Ni \times Zxi$, where $i = 1, 2$, and $3$. In the above formula, $Zi$ denotes the score, $Mi$ denotes the current fingerprint pattern information, $Ni$ denotes the current pattern depth information, and $m$ denotes the historical fingerprint information. The score of the fingerprint information may also be calculated based on part of the current pattern depth information.

In the solution of the embodiment of the present application herein, the current fingerprint information is identified to obtain the target identification result, the target identification result is decided, and if the target identification result satisfies the preset fingerprint update condition, the historical fingerprint information stored in the database is updated according to the current fingerprint information. By implementing the preceding solution, the correct biometric information can be intelligently identified, the safety of users can be enhanced, and the efficiency of unlocking operations can be improved.

**Embodiment three**

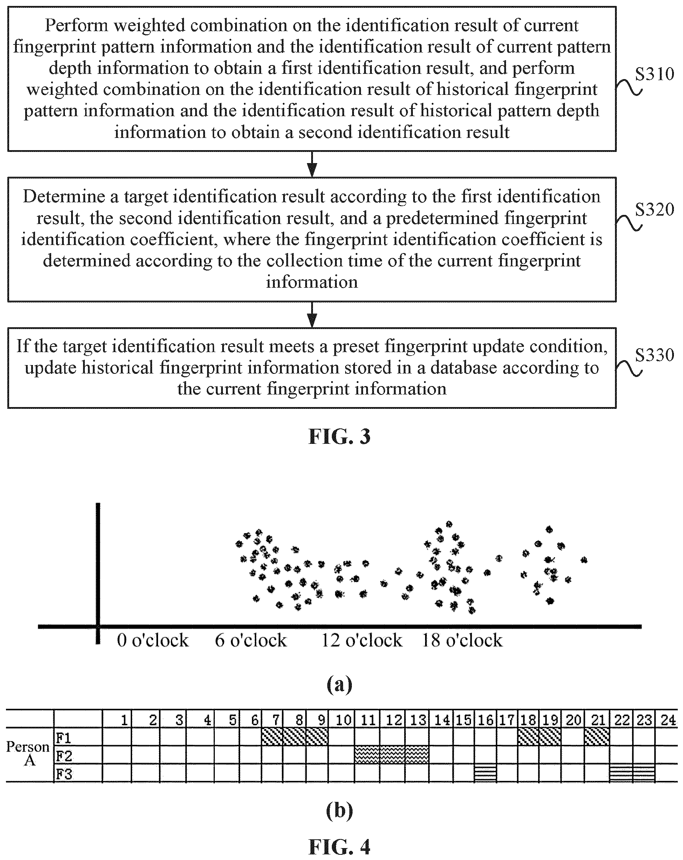

FIG. 3 is a flowchart of a biometric updating process according to Embodiment three of the present application. The embodiment herein describes the process of identifying the current fingerprint information based on the preceding embodiments. As shown in FIG. 3, the method includes S310, S320, and S330.

In S310, weighted combination is performed on the identification result of current fingerprint pattern information and the identification result of current pattern depth information to obtain a first identification result, and weighted combination is performed on the identification result of historical fingerprint pattern information and the identification result of historical pattern depth information to obtain a second identification result.

In the solution herein, a current pattern feature may be obtained by identifying the pattern feature in the current fingerprint pattern information. The pattern feature may include a pattern form, a pattern shape, a pattern size, and the like. A current depth feature may be obtained by identifying the depth feature in the current pattern depth information. The depth feature may include a fingerprint gap, a fingerprint pressing color, and the like. Combination calculation is performed on the current pattern feature and the current depth feature according to a preset current coefficient to obtain the first identification result.

In the embodiment herein, a historical pattern feature and a historical depth feature may also be obtained by identifying the historical fingerprint pattern information and the historical pattern depth information. Combination calculation is performed on the historical pattern feature and the historical depth feature according to a preset historical coefficient to obtain the second identification result.

The current coefficient and the historical coefficient may be set according to fingerprint information identification requirements. For example, the coefficient of the current pattern feature may be represented by a%, the coefficient of the current depth feature may be represented by b%, the coefficient of historical pattern feature may be represented by x%, and the coefficient of the historical depth feature may be represented by y%.

In S320, a target identification result is determined according to the first identification result, the second identification result, and a predetermined fingerprint identification coefficient, where the fingerprint identification coefficient is determined according to the collection time of the current fingerprint information.

In the solution herein, for the newly installed smart lock, the effective fingerprint identification coefficient $P\_n$ cannot be generated because the number of times of the target user uses the fingerprint is not sufficient. Additionally, since the smart lock just starts to be used and the fingerprint of the target user is just enrolled, the evolution and fuzzy probability of the fingerprint is low. Therefore, the fingerprint identification coefficient $P\_n$ may be set to 1 for a period of time when the smart lock is just used. For example, the fingerprint identification coefficient $P\_n$ within first week of the use of the smart lock may be set to 1. After the smart lock has been used for a certain period of time, the fingerprint identification coefficient $P\_n$ may be set: $0.5 < P\_n < 1$.

In the embodiment herein, after the smart lock has been used for a certain period of time, in the fingerprint information identification process, the time when the target user uses the smart lock exhibits a relatively regular temporal variation, for example, the time period after work, a time period at school, and the like. Therefore, the collection time of the fingerprint information of the target user within a certain period of time may be discretized, and the discretized data may then be clustered to generate the appearance frequency and the appearance time period of the target user.

For example, FIG. 4 is a schematic diagram of fingerprint information collection time according to Embodiment three of the present application. As shown in FIG. 4(a), the time when the target user uses the smart lock exhibits a relatively regular temporal variation. As shown in FIG. 4(b), the appearance frequency and the appearance time period of the target user may be generated by clustering the discretized data. In FIG. 4(b), F1 represents the time point with a relatively high appearance frequency, F2 represents the time point at which the appearance frequency is lower than the appearance frequency corresponding to F1, and F3 represents the time point when the target user may occasionally appear. Therefore, the fingerprint identification coefficients corresponding to F1, F2, and F3 may be set and are represented by P1, P2, and P3, respectively, that is, three fingerprint identification coefficients may be used for representing the rationality of the appearance of the person A at the corresponding time, respectively.

In the case of fingerprint identification attempts during irrational time periods, to prevent others from stealing the fingerprint information of the target user, the magnitude of the fingerprint identification coefficient may be appropriately increased to improve the accuracy of fingerprint identification. For example, a fingerprint identification coefficient P4 may be set. P4 is used for representing one identification coefficient corresponding to a time point other than F1, F2, and F3, and $P1 < P2 < P3 < P4$.

In the solution herein, the target identification result may be obtained by multiplying the first identification result, the second identification result, and the fingerprint identification coefficient. The target identification result may also be obtained by calculating a quotient of the product of the first identification result multiplied by the fingerprint identification coefficient and the product of the second identification result multiplied by the fingerprint identification coefficient.

In the solution herein, optionally, the step where the target identification result is determined according to the first identification result, the second identification result, and the predetermined fingerprint identification coefficient includes the following steps.

The quotient of the first identification result and the second identification result is calculated to obtain an identification similarity.

The identification similarity is multiplied by the predetermined fingerprint identification coefficient to obtain the target identification result.

For example, the target identification result is calculated by using the following formula:

$$K = (Ma*a\% + Nb*b\%)/(Mx*x\% + Ny*y\%)*Pn.$$

In the above formula, K denotes the target identification result, Ma denotes the current pattern feature, Nb denotes the current depth feature, Mx denotes the historical pattern feature, Ny denotes the historical depth feature, a% denotes the coefficient of the current pattern feature, b% denotes the coefficient of the current depth feature, x% denotes the coefficient of the historical pattern feature, and y% denotes the coefficient of historical depth feature.

By setting the fingerprint identification coefficient to adjust the target identification result, the identification accuracy of the fingerprint information can be improved.

In S330, if the target identification result satisfies a preset fingerprint update condition, historical fingerprint information stored in a database is updated according to the current fingerprint information.

In the solution of the embodiment of the present application herein, weighted combination is performed on the identification result of the current fingerprint pattern information and the identification result of the current pattern depth information to obtain the first identification result, and weighted combination is performed on the identification result of the historical fingerprint pattern information and the identification result of the historical pattern depth information to obtain the second identification result; the target identification result is determined according to the first identification result, the second identification result, and the predetermined fingerprint identification coefficient; the target identification result is decided, and if the current identification result satisfies the preset fingerprint update condition, the historical fingerprint information stored in the database is updated according to the current fingerprint information. By implementing the preceding solution, the correct biometric information can be intelligently identified, the safety of users can be enhanced, and the efficiency of unlocking operations can be improved.

Embodiment four

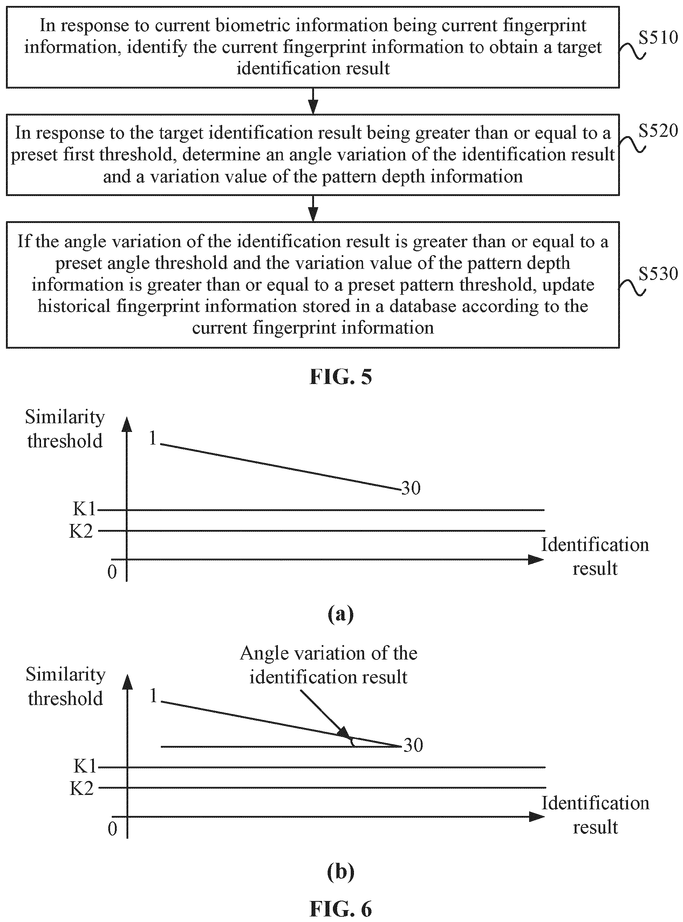

FIG. 5 is a flowchart of a biometric updating process according to Embodiment four of the present application. The embodiment herein describes the fingerprint update process based on the preceding embodiments. As shown in FIG. 5, the method includes S510, S520, and S530.

In S510, in response to current biometric information being current fingerprint information, the current fingerprint information is identified to obtain a target identification result.

In S520, in response to the target identification result being greater than or equal to a preset first threshold, an angle variation of the identification result and a variation value of the pattern depth information are determined.

The preset first threshold may be set according to the unlocking requirements of the smart lock. For example, the preset first threshold may be set to 90%.

In the embodiment herein, the angle variation of the identification result may refer to the inclination angle of a line connecting the target identification result and a historical fingerprint identification result, and the variation value of the pattern depth information may refer to the change amount of current pattern depth information with respect to historical pattern depth information.

In the solution herein, if the target identification result is greater than or equal to the preset first threshold, which means that the similarity between the current fingerprint information and the historical fingerprint information stored in a database of the smart lock is high, the smart lock is accessed, and at the same time, whether to update the fingerprint is decided. For example, the angle variation of the identification result may be calculated based on the target identification result and the historical fingerprint identification result, and the variation value of the pattern depth information may be calculated based on the current pattern depth information and the historical pattern depth information.

In the solution herein, optionally, the step where the angle variation of the identification result is determined includes the following step.

The slope of a line connecting the target identification result and a predetermined historical fingerprint identification result is calculated according to the target identification result and the historical fingerprint identification result to obtain the angle variation of the identification result.

For example, FIG. 6 is a schematic diagram of the angle variation of the identification result according to Embodiment four of the present application. In FIG. 6, K1 represents a first threshold, K2 represents a second threshold, and the second threshold is less than the first threshold. As shown in FIG. 6(a), the historical fingerprint identification result over a period of time is connected with the target identification result. As shown in FIG. 6(b), the slope of the line connecting the target identification result and the historical fingerprint identification result is calculated to obtain the angle variation of the identification result.

By calculating the angle variation of the identification result, whether to update the fingerprint can be decided based on the angle variation of the identification result, thereby improving the security of fingerprint update.

In the solution herein, optionally, the current pattern depth information includes first current pattern depth information, second current pattern depth information, and third current pattern depth information.

Correspondingly, the step where the variation value of the pattern depth information is determined includes the following steps.

The identification result of the first current pattern depth information is divided by a predetermined first historical pattern depth information to obtain a first variation value, the identification result of the second current pattern depth information is divided by a predetermined second historical pattern depth information to obtain a second variation value, and the identification result of the third current pattern depth information is divided by a predetermined third historical pattern depth information to obtain a third variation value.

Weighted combination is performed on the first variation value, the second variation value, and the third variation value to obtain the variation value of the pattern depth information.

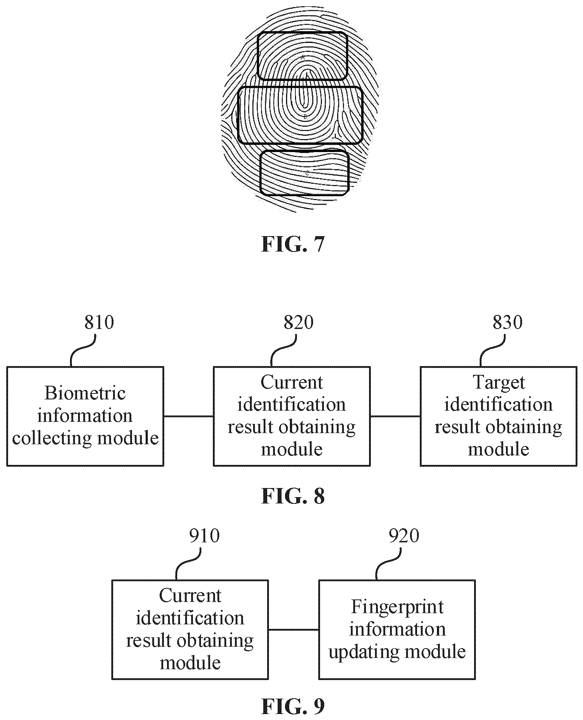

For example, FIG. 7 is a schematic diagram of fingerprint region division according to Embodiment four of the present application. As shown in FIG. 7, since the heights and pressing habits of different people affect the depth of the identification region of the fingerprint, the fingerprint is divided into three regions represented by A, B, and C, respectively. The current pattern depth information of the three regions A, B, and C may be represented by the first current pattern depth information, the second current pattern depth information, and the third current pattern depth information, respectively.

For example, the current pattern depth information of different regions may be divided by the corresponding historical pattern depth information to obtain variation values, and combination calculation is performed on the variation values according to different coefficients to obtain the variation value of the pattern depth information.

By calculating the variation value of the pattern depth information, whether to update the fingerprint can be decided based on the variation value of the pattern depth information, thereby improving the security of fingerprint update.

In S530, if the angle variation of the identification result is greater than or equal to a preset angle threshold and the variation value of the pattern depth information is greater than or equal to a preset pattern threshold, historical fingerprint information stored in a database is updated according to the current fingerprint information.

The preset angle threshold and the preset pattern threshold may be set according to the fingerprint update requirements of the smart lock. For example, the angle threshold may be set to 30 degrees, and the pattern threshold may be set to 0.2.

In the solution herein, if the angle variation of the identification result is greater than or equal to the preset angle threshold and the variation value of the pattern depth information is greater than or equal to the preset pattern threshold, the historical fingerprint information stored in the database needs to be updated.

In the embodiment herein, if the angle variation of the identification result and the variation value of the pattern depth information do not satisfy the preset threshold conditions, which means that the unlocking efficiency based on the current identification result is relatively high, the fingerprint does not need to be updated.

In the solution herein, optionally, the step where the historical fingerprint information stored in the database is updated according to the current fingerprint information if the target identification result satisfies the preset fingerprint update condition further includes the following step.

In response to the target identification result being less than the preset first threshold and greater than or equal to a preset second threshold, the historical fingerprint information stored in the database is updated according to the current fingerprint information.

In the solution herein, the preset second threshold may also be set according to the unlocking requirements of the smart lock. For example, the second threshold may be set to 80%. The second threshold is less than the first threshold. By setting two different thresholds to decide the identification result of the fingerprint information, the identification accuracy of the fingerprint information can be improved.

In the embodiment herein, if the target identification result is less than the preset first threshold and greater than or equal to the preset second threshold, which means that the current fingerprint has a significant loss, the historical fingerprint information stored in the database needs to be updated according to the current fingerprint information.

If the identification results of the fingerprints of multiple fingers are all less than the preset first threshold and greater than or equal to the preset second threshold, it means that none of the fingers of the target user meet the fingerprint identification requirements. If the identification results of the fingerprints of multiple fingers are all less than the preset first threshold and greater than or equal to the preset second threshold and the identification time of the fingerprint information is all within the same identification time interval, it may be concluded that the current identification is effective, and the smart lock is accessed.

Optionally, if the target identification result is less than the preset second threshold, alarm information is generated, and the target identification result is recorded.

For example, if the target identification result is less than the preset second threshold, which means that the current identification is abnormal, the alarm information is generated and provided for the target user to process the current identification. For example, a text message may be sent to the mobile phone of the target user to prompt the target user, or an alarm may be issued as an audible prompt. If the target user decides that the current identification is normal and the reason why the alarm information is generated is that the identification accuracy becomes very low due to long-term use or change of fingerprint data, the recovery and reset program of the smart lock may be initiated to re-enter the fingerprint data.

In the solution of the embodiment of the present application herein, the current fingerprint information is identified to obtain the target identification result; in response to the target identification result being greater than or equal to the preset first threshold, the angle variation of the identification result and the variation value of the pattern depth information are determined; if the angle variation of the identification result is greater than or equal to the preset angle threshold and the variation value of the pattern depth information is greater than or equal to the preset pattern threshold, the historical fingerprint information stored in the database is updated according to the current fingerprint information. By implementing the preceding solution, the correct biometric information can be intelligently identified, the safety of users can be enhanced, and the efficiency of unlocking operations can be improved.

In the solution herein, in addition to the fingerprint lock, facial recognition-based access control systems and entrance/exit gates are also generally required for residential surveillance, commercial surveillance, and surveillance in the Safe City Urban Management System. There are also facial recognition-enabled smart locks. All such systems operate based on facial recognition technology, and when a predetermined threshold is met, which means that the individuals are whitelisted personnel within the systems, the access is authorized. With the long-term use of equipment and the change of face features, the images in the face database also need to be updated in time. The preceding solution is also applicable to the update of face images, and the implementation method is similar

Embodiment five

FIG. 8 is a structure diagram of a biometric identification apparatus according to Embodiment five of the present application. As shown in FIG. 8, the apparatus includes a biometric information collecting module 810, a current identification result obtaining module 820, and a target identification result obtaining module 830.

The biometric information collecting module 810 is configured to collect current biometric information, where the current biometric information includes current human face information and/or current fingerprint information.

The current identification result obtaining module 820 is configured to identify the current biometric information to obtain a current identification result.

The target identification result obtaining module 830 is configured to determine an identification coefficient based on the collection time of the current biometric information and adjust the current identification result based on the identification coefficient to obtain a target identification result.

The biometric identification apparatus provided by the embodiment of the present application herein may perform the biometric identification method provided by any of the embodiments of the present application and has function modules and beneficial effects corresponding to the performed method.

Embodiment six

FIG. 9 is a structure diagram of a biometric updating apparatus according to Embodiment six of the present application. As shown in FIG. 9, the apparatus includes a current identification result obtaining module 910 and a fingerprint information updating module 920.

The current identification result obtaining module 910 is configured to, in response to current biometric information being current fingerprint information, identify the current fingerprint information to obtain a target identification result, where the current fingerprint information includes current fingerprint pattern information and current pattern depth information.

The fingerprint information updating module 920 is configured to, if the target identification result satisfies a preset fingerprint update condition, update historical fingerprint information stored in a database according to the current fingerprint information.

In the solution herein, optionally, the current identification result obtaining module 910 includes a result obtaining unit and a current identification result determining unit.

The result obtaining unit is configured to perform weighted combination on the identification result of current fingerprint pattern information and the identification result of current pattern depth information to obtain a first identification result and perform weighted combination on the identification result of historical fingerprint pattern information and the identification result of historical pattern depth information to obtain a second identification result.

The current identification result determining unit is configured to determine the target identification result according to the first identification result, the second identification result, and a predetermined fingerprint identification coefficient, where the fingerprint identification coefficient is determined according to the collection time of the current fingerprint information.

In the solution herein, optionally, the current identification result determining unit is configured to determine the target identification result according to the first identification result, the second identification result, and the predetermined fingerprint identification coefficient in the following manner.

The quotient of the first identification result and the second identification result is calculated to obtain an identification similarity.

The identification similarity is multiplied by the predetermined fingerprint identification coefficient to obtain the target identification result.

In the solution herein, optionally, the fingerprint information updating module 920 includes a change value determining unit and a fingerprint information updating unit.

The change value determining unit is configured to, in response to the target identification result being greater than or equal to a preset first threshold, determine an angle variation of the identification result and a variation value of the pattern depth information.

The fingerprint information updating unit is configured to, if the angle variation of the identification result is greater than or equal to a preset angle threshold and the variation value of the pattern depth information is greater than or equal to a preset pattern threshold, update the historical fingerprint information stored in the database according to the current fingerprint information.

In the solution herein, optionally, the change value determining unit is configured to determine the angle variation of the identification result in the following manner.

The slope of a line connecting the target identification result and a predetermined historical fingerprint identification result is calculated according to the target identification result and the historical fingerprint identification result to obtain the angle variation of the identification result.

In the solution herein, optionally, the current pattern depth information includes first current pattern depth information, second current pattern depth information, and third current pattern depth information.

Correspondingly, the change value determining unit is configured to determine the variation value of the pattern depth information in the following manner.

The identification result of the first current pattern depth information is divided by a predetermined first historical pattern depth information to obtain a first variation value, the identification result of the second current pattern depth information is divided by a predetermined second historical pattern depth information to obtain a second variation value, and the identification result of the third current pattern depth information is divided by a predetermined third historical pattern depth information to obtain a third variation value.

Weighted combination is performed on the first variation value, the second variation value, and the third variation value to obtain the variation value of the pattern depth information.

In the solution herein, optionally, the fingerprint information updating module 920 further includes a threshold deciding unit.

The threshold deciding unit is configured to, in response to the target identification result being less than the preset first threshold and greater than or equal to a preset second threshold, update the historical fingerprint information stored in the database according to the current fingerprint information.

The biometric updating apparatus provided by the embodiment of the present application herein may perform the biometric updating method provided by any of the embodiments of the present application and has function modules and beneficial effects corresponding to the performed method.

Embodiment seven

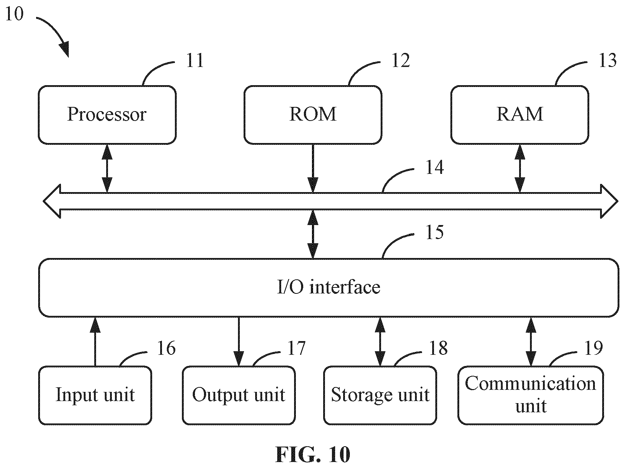

FIG. 10 shows a structure diagram of an electronic device 10 for performing the embodiments of the present application. The electronic device may represent various forms of digital computers, such as a laptop computer, a desktop computer, a workstation, a personal digital assistant, a server, a blade server, a mainframe computer, and other appropriate computers. The electronic device may also represent various forms of mobile apparatuses, such as a personal digital assistant, a cellular telephone, a smartphone, a wearable device (such as a helmet, glasses, a watch, and the like), and other similar computing apparatuses. The components shown herein, the connections and relationships thereof, and the functions thereof are used as examples only.

As shown in FIG. 10, the electronic device 10 includes at least one processor 11 and a memory communicatively connected to the at least one processor 11. The memory may be, for example, a read-only memory (ROM) 12 and a random-access memory (RAM) 13. The memory is configured to store a computer program executable by the at least one processor, and the processor 11 may perform various appropriate actions and processing in accordance with the computer program stored in the ROM 12 or the computer program loaded into the RAM 13 from a storage unit 18. Various programs and data required for the operation of the electronic device 10 may also be stored in the RAM 13. The processor 11, the ROM 12, and the RAM 13 are connected to each other via a bus 14. An input/output (I/O) interface 15 is also connected to the bus 14.

Multiple components in the electronic device 10 are connected to the I/O interface 15. The multiple components include an input unit 16 such as a keyboard or a mouse, an output unit 17 such as various types of displays or speakers, the storage unit 18 such as a magnetic disk or an optical disk, and a communication unit 19 such as a network card, a modem or a wireless communication transceiver. The communication unit 19 allows the electronic device 10 to exchange information/data with other devices over a computer network such as the Internet and/or various telecommunications networks.

The processor 11 may be various general-purpose and/or special-purpose processing components having processing and computing capabilities. Examples of the processor 11 include, but are not limited to, a central processing unit (CPU), a graphics processing unit (GPU), various special-purpose artificial intelligence (AI) computing chips, various processors executing machine learning models and algorithms, a digital signal processor (DSP), and any appropriate processor, controller, and microcontroller. The processor 11 performs the various methods and processing described above, for example, a biometric identification method or a biometric updating method.

In some embodiments, the biometric identification method or the biometric updating method may be implemented as computer programs tangibly contained in a computer-readable storage medium such as the storage unit 18. In some embodiments, part or all of computer programs may be loaded and/or installed onto the electronic device 10 via the ROM 12 and/or the communication unit 19. When the computer programs are loaded to the RAM 13 and executed by the processor 11, one or more steps of the biometric identification method or the biometric updating method described above may be performed. Alternatively, in other embodiments, the processor 11 may be configured, in any other appropriate manner (for example, by means of firmware), to perform the biometric identification method or the biometric updating method.

The various embodiments of the systems and techniques described herein may be implemented in digital electronic circuitry, integrated circuitry, a field-programmable gate array (FPGA), an application-specific integrated circuit (ASIC), application-specific standard parts (ASSP), a system on a chip (SOC), a complex programmable logic device (CPLD), computer hardware, firmware, software and/or a combination thereof. These embodiments may include implementations in one or more computer programs. The one or more computer programs may be executable and/or interpretable on a programmable system including at least one programmable processor. The programmable processor may be a special-purpose or general-purpose programmable processor for receiving data and instructions from a memory system, at least one input apparatus, and at least one output apparatus and transmitting the data and instructions to the memory system, the at least one input apparatus, and the at least one output apparatus.

Computer programs for implementing the method of the present application may be written in any combination of one or more programming languages. These computer programs may be provided for a processor of a general-purpose computer, special-purpose computer or another programmable data processing apparatus so that the computer programs, when executed by the processor, cause the functions/operations designated in the flowcharts and/or block diagrams to be implemented. The computer programs may be executed entirely on a machine, executed partly on a machine, executed as a stand-alone software package, executed partly on a machine and partly on a remote machine, or executed entirely on a remote machine or a server.

In the context of the present application, the computer-readable storage medium may be any tangible medium including or storing a computer program which is used by or used in conjunction with an instruction execution system, apparatus or device. The computer-readable storage medium may include, but is not limited to, an electronic, magnetic, optical, electromagnetic, infrared or semiconductor system, apparatus or device or any appropriate combination thereof. Alternatively, the computer-readable storage medium may be a machine-readable signal medium. Examples of the machine-readable storage medium may include an electrical connection having one or more wires, a portable computer disk, a hard disk, a random-access memory (RAM), a read-only memory (ROM), an erasable programmable read-only memory (EPROM), a flash memory, an optical fiber, a portable compact disc read-only memory (CD-ROM), an optical memory device, a magnetic memory device or any appropriate combination thereof.

To provide interaction with a user, the systems and techniques described herein may be implemented on an electronic device having a display apparatus (for example, a cathode ray tube (CRT) or liquid crystal display (LCD) monitor) for displaying information to the user as well as a keyboard and a pointing apparatus (for example, a mouse or a trackball) by which the user can provide input for the electronic device. Other types of apparatuses may also be used for providing interaction with a user. For example, feedback provided for the user may be sensory feedback in any form (for example, visual feedback, auditory feedback or tactile feedback). The input from the user may be received in any form (including acoustic input, voice input, or tactile input).

The systems and techniques described herein may be implemented in a computing system including a back-end component (for example, a data server), a computing system including a middleware component (for example, an application server), a computing system including a front-end component (for example, a client computer having a graphical user interface or a web browser through which a user can interact with implementations of the systems and techniques described herein), or a computing system including any combination of such back-end, middleware or front-end components. Components of a system may be interconnected by any form or medium of digital data communication (for example, a communication network). Examples of the communication network include a local area network (LAN), a wide area network (WAN), a blockchain network, and the Internet.

The computing system may include clients and servers. The client and the server are generally remote from each other and typically interact through a communication network. The relationship of the client and the server arises by virtue of computer programs running on the respective computers and having a client-server relationship with each other. The server may be a cloud server, which is also referred to as a cloud computing server or a cloud host. As a host product in a cloud computing service system, the server solves the defects of difficult management and weak service scalability in conventional physical host and virtual private server (VPS) services.

It is to be understood that the various forms of processes shown above can be used to reorder, add or delete steps. For example, the steps described in the present application may be executed in parallel, in sequence, or in a different order as long as the desired results of the solutions in the present application can be achieved.

**Claims**

1. A biometric identification method, comprising:

   collecting current biometric information, wherein the current biometric information comprises at least one of current human face information or current fingerprint information;
   identifying the current biometric information to obtain a current identification result; and
   determining an identification coefficient based on a collection time of the current biometric information, and adjusting the current identification result based on the identification coefficient to obtain a target identification result.

2. A biometric updating method, comprising:

   in response to current biometric information being current fingerprint information, identifying the current fingerprint information by using the biometric identification method of claim 1 to obtain a target identification result, wherein the current fingerprint information comprises current fingerprint pattern information and current pattern depth information; and
   in response to the target identification result satisfying a preset fingerprint update condition, updating historical fingerprint information stored in a database according to the current fingerprint information.

3. The method of claim 2, wherein identifying the current fingerprint information to obtain the target identification result comprises:

   performing weighted combination on an identification result of the current fingerprint pattern information and an identification result of the current pattern depth information to obtain a first identification result, and performing weighted combination on an identification result of historical fingerprint pattern information and an identification result of historical pattern depth information to obtain a second identification result; and
   determining the target identification result according to the first identification result, the second identification result, and a predetermined fingerprint identification coefficient, wherein the fingerprint identification coefficient is determined according to a collection time of the current fingerprint information.

4. The method of claim 3, wherein determining the target identification result according to the first identification result, the second identification result, and the predetermined fingerprint identification coefficient comprises:

   calculating a quotient of the first identification result and the second identification result to obtain an identification similarity; and
   multiplying the identification similarity by the predetermined fingerprint identification coefficient to obtain the target identification result.

5. The method of claim 2, wherein in response to the target identification result satisfying the preset fingerprint update condition, updating the historical fingerprint information stored in the database according to the current fingerprint information comprises:

in response to the target identification result being greater than or equal to a preset first threshold, determining an angle variation of an identification result and a variation value of pattern depth information; and

in response to the angle variation of the identification result being greater than or equal to a preset angle threshold and the variation value of the pattern depth information being greater than or equal to a preset pattern threshold, updating the historical fingerprint information stored in the database according to the current fingerprint information.

6. The method of claim 5, wherein determining the angle variation of the identification result comprises: calculating, according to the target identification result and a predetermined historical fingerprint identification result, a slope of a line connecting the target identification result and the historical fingerprint identification result to obtain the angle variation of the identification result.

7. The method of claim 5, wherein the current pattern depth information comprises first current pattern depth information, second current pattern depth information, and third current pattern depth information; and

wherein determining the variation value of the pattern depth information comprises:

dividing an identification result of the first current pattern depth information by a predetermined first historical pattern depth information to obtain a first variation value, dividing an identification result of the second current pattern depth information by a predetermined second historical pattern depth information to obtain a second variation value, and dividing an identification result of the third current pattern depth information by a predetermined third historical pattern depth information to obtain a third variation value; and

performing weighted combination on the first variation value, the second variation value, and the third variation value to obtain the variation value of the pattern depth information.

8. The method of claim 2, wherein in response to the target identification result satisfying the preset fingerprint update condition, updating the historical fingerprint information stored in the database according to the current fingerprint information further comprises:

in response to the target identification result being less than a preset first threshold and greater than or equal to a preset second threshold, updating the historical fingerprint information stored in the database according to the current fingerprint information.

9. An electronic device, comprising:

at least one processor; and

a memory communicatively connected to the at least one processor;

wherein the memory is configured to store a computer program executable by the at least one processor, and the computer program, when executed by the at least one processor, enables the at least one processor to perform the biometric identification method of claim 1 or the biometric updating method of any one of claims 2 to 8.

10. A computer-readable storage medium storing computer instructions for, when executed by a processor, enabling the processor to perform the biometric identification method of claim 1 or the biometric updating method of any one of claims 2 to 8.

Collect current biometric information, where the current biometric information includes current human face information and/or current fingerprint information ~S110

Identify the current biometric information to obtain a current identification result ~S120

Determine an identification coefficient based on the collection time of the current biometric information, and adjust the current identification result based on the identification coefficient to obtain a target identification result ~S130

**FIG. 1**

In response to current biometric information being current fingerprint information, identify the current fingerprint information to obtain a target identification result, where the current fingerprint information includes current fingerprint pattern information and current pattern depth information ~S210

If the target identification result meets a preset fingerprint update condition, update historical fingerprint information stored in a database according to the current fingerprint information ~S220

**FIG. 2**

Perform weighted combination on the identification result of current fingerprint pattern information and the identification result of current pattern depth information to obtain a first identification result, and perform weighted combination on the identification result of historical fingerprint pattern information and the identification result of historical pattern depth information to obtain a second identification result $\sim$S310

Determine a target identification result according to the first identification result, the second identification result, and a predetermined fingerprint identification coefficient, where the fingerprint identification coefficient is determined according to the collection time of the current fingerprint information $\sim$S320

If the target identification result meets a preset fingerprint update condition, update historical fingerprint information stored in a database according to the current fingerprint information $\sim$S330

## FIG. 3

0 o'clock   6 o'clock   12 o'clock   18 o'clock

(a)

| | | 1 | 2 | 3 | 4 | 5 | 6 | 7 | 8 | 9 | 10 | 11 | 12 | 13 | 14 | 15 | 16 | 17 | 18 | 19 | 20 | 21 | 22 | 23 | 24 |
|---|---|---|---|---|---|---|---|---|---|---|---|---|---|---|---|---|---|---|---|---|---|---|---|---|---|
| Person A | F1 | | | | | | | ▨ | ▨ | ▨ | | | | | | | | | ▨ | ▨ | | ▨ | | | |
| | F2 | | | | | | | | | | | | ▨ | ▨ | ▨ | | | | | | | | | | |
| | F3 | | | | | | | | | | | | | | | | | ▤ | | | | | | ▤ | |

(b)

## FIG. 4

In response to current biometric information being current fingerprint information, identify the current fingerprint information to obtain a target identification result ⟩ S510

In response to the target identification result being greater than or equal to a preset first threshold, determine an angle variation of the identification result and a variation value of the pattern depth information ⟩ S520

If the angle variation of the identification result is greater than or equal to a preset angle threshold and the variation value of the pattern depth information is greater than or equal to a preset pattern threshold, update historical fingerprint information stored in a database according to the current fingerprint information ⟩ S530

**FIG. 5**

(a)

(b)

**FIG. 6**

**FIG. 7**

| 810 | 820 | 830 |
|---|---|---|
| Biometric information collecting module | Current identification result obtaining module | Target identification result obtaining module |

**FIG. 8**

| 910 | 920 |
|---|---|
| Current identification result obtaining module | Fingerprint information updating module |

**FIG. 9**

10

11 Processor

12 ROM

13 RAM

14

15 I/O interface

16 Input unit

17 Output unit

18 Storage unit

19 Communication unit

**FIG. 10**

## INTERNATIONAL SEARCH REPORT

| International application No. |
|---|
| **PCT/CN2023/099591** |

### A. CLASSIFICATION OF SUBJECT MATTER

G07C 9/00(2020.01)i; G07C9/37(2020.01)i

According to International Patent Classification (IPC) or to both national classification and IPC

### B. FIELDS SEARCHED

Minimum documentation searched (classification system followed by classification symbols)

IPC:G07C

Documentation searched other than minimum documentation to the extent that such documents are included in the fields searched

Electronic data base consulted during the international search (name of data base and, where practicable, search terms used)

CNTXT, ENTXTC, WPABS, CJFD: 指纹, 人脸, 生物, 识别, 纹, 纹路, 深浅, 变化, 更新, 系数, 时间段, 一定时间, 晚上, 时间点, 时间内, 期间, 白天, 上午, 时段, 权重, 比重, 占比, fingerprint, face, creature, recogni+, print, shade, change, update, coefficient, time, period, night, day, morning, weight+, percent

### C. DOCUMENTS CONSIDERED TO BE RELEVANT

| Category* | Citation of document, with indication, where appropriate, of the relevant passages | Relevant to claim No. |
|---|---|---|
| X | CN 114333133 A (HANGZHOU HIKVISION DIGITAL TECHNOLOGY CO., LTD.) 12 April 2022 (2022-04-12) description, paragraphs [0006]-[0047] | 1, 9-10 |
| Y | CN 114333133 A (HANGZHOU HIKVISION DIGITAL TECHNOLOGY CO., LTD.) 12 April 2022 (2022-04-12) description, paragraphs [0006]-[0047] | 2, 8 |
| Y | CN 107480641 A (LENOVO (BEIJING) CO., LTD.) 15 December 2017 (2017-12-15) description, paragraph [0068] | 2, 8 |
| A | CN 110781772 A (GUANGDONG OPPO MOBILE COMMUNICATIONS CO., LTD.) 11 February 2020 (2020-02-11) entire document | 1-10 |
| A | CN 111783058 A (QINGDAO HISENSE SMART HOME SYSTEMS CO., LTD.) 16 October 2020 (2020-10-16) entire document | 1-10 |

☑ Further documents are listed in the continuation of Box C.   ☑ See patent family annex.

| | |
|---|---|
| * Special categories of cited documents: | "T" later document published after the international filing date or priority date and not in conflict with the application but cited to understand the principle or theory underlying the invention |
| "A" document defining the general state of the art which is not considered to be of particular relevance | |
| "D" document cited by the applicant in the international application | "X" document of particular relevance; the claimed invention cannot be considered novel or cannot be considered to involve an inventive step when the document is taken alone |
| "E" earlier application or patent but published on or after the international filing date | |
| "L" document which may throw doubts on priority claim(s) or which is cited to establish the publication date of another citation or other special reason (as specified) | "Y" document of particular relevance; the claimed invention cannot be considered to involve an inventive step when the document is combined with one or more other such documents, such combination being obvious to a person skilled in the art |
| "O" document referring to an oral disclosure, use, exhibition or other means | |
| "P" document published prior to the international filing date but later than the priority date claimed | "&" document member of the same patent family |

| Date of the actual completion of the international search | Date of mailing of the international search report |
|---|---|
| **30 August 2023** | **05 September 2023** |

| Name and mailing address of the ISA/CN | Authorized officer |
|---|---|
| **China National Intellectual Property Administration (ISA/CN)** **China No. 6, Xitucheng Road, Jimenqiao, Haidian District, Beijing 100088** | |
| | Telephone No. |

Form PCT/ISA/210 (second sheet) (July 2022)

**INTERNATIONAL SEARCH REPORT**

International application No.

**PCT/CN2023/099591**

**C.    DOCUMENTS CONSIDERED TO BE RELEVANT**

| Category* | Citation of document, with indication, where appropriate, of the relevant passages | Relevant to claim No. |
|---|---|---|
| A | WO 2014050281 A1 (NEC BIGLOBE LTD.) 03 April 2014 (2014-04-03)<br>entire document | 1-10 |
| A | US 2017103195 A1 (SAMSUNG ELECTRONICS CO., LTD.) 13 April 2017 (2017-04-13)<br>entire document | 1-10 |

Form PCT/ISA/210 (second sheet) (July 2022)

## INTERNATIONAL SEARCH REPORT
### Information on patent family members

International application No.

**PCT/CN2023/099591**

| Patent document cited in search report | | | Publication date (day/month/year) | Patent family member(s) | | | Publication date (day/month/year) |
|---|---|---|---|---|---|---|---|
| CN | 114333133 | A | 12 April 2022 | None | | | |
| CN | 107480641 | A | 15 December 2017 | WO | 2019033899 | A1 | 21 February 2019 |
| CN | 110781772 | A | 11 February 2020 | None | | | |
| CN | 111783058 | A | 16 October 2020 | None | | | |
| WO | 2014050281 | A1 | 03 April 2014 | US | 2015234881 | A1 | 20 August 2015 |
| | | | | JP | 2014067171 | A | 17 April 2014 |
| | | | | JP | 5805040 | B2 | 04 November 2015 |
| US | 2017103195 | A1 | 13 April 2017 | US | 10192045 | B2 | 29 January 2019 |
| | | | | KR | 20170043404 | A | 21 April 2017 |
| | | | | KR | 102365412 | B1 | 21 February 2022 |

Form PCT/ISA/210 (patent family annex) (July 2022)

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- CN 202211320271